# EUROPEAN PATENT APPLICATION

(11) **EP 2 305 902 A2**
(43) Date of publication of application: **06.04.2011**
(21) Application number: 10011549.2
(22) Date of filing: 29.09.2010
(51) Int. Cl.: E03D 9/03

(54) **Disinfectant product dispenser applicable for toilet bowls**

(30) Priority: 30.09.2009 ES 200901378 U
(71) Applicant: COLIBRI1, S.L., 08458 Sant Pere de Vilamajor Barcelona (ES)
(72) Inventor: Aloy Font, Juan Manuel, 08458 SANT PERE DE VILAMAJOR, Barcelona (ES)
(74) Representative: Maldonado Jordan, Julia

(57) **Abstract**

The invention relates to a disinfectant product dispenser applicable to toilets. This dispenser comprises a container formed by a flexible tube, preferably made of plastic material, which contains the disinfectant product and has distributed therealong holes for the entrance and exit of the water flushed through the tank; said flexible tube having a flexibility suitable for adapting to the inner contour of the toilet, and for remaining in a stable use position below the thickened portion of the toilet in which the water outlets are defined.

## Description

### Object of the Invention

The present invention relates to a disinfectant product dispenser applicable for toilet bowls.

### Background of the Invention

It is currently common practice to use disinfectant product dispensers for toilet bowls. In public restrooms, it is common to use automatic metering devices which provide the disinfectant product in the water flushed by the tank; however these metering devices are expensive and require a fixed installation, so they are mainly intended for frequently used restrooms and especially for restrooms in public establishments.

At the household level, different means are used to apply disinfectant in the toilet bowl. In some cases, bottled disinfectants are used, the use of which is limited to pouring a stream of the product into the toilet bowl. This technique has a very limited duration and effectiveness because the use of the tank causes the entrainment and the final elimination of the disinfectant.

Different cage-like supports are also known which contain a disinfectant product cake and have a hook for being hung on the edge of the toilet bowl, such that when the tank is used, the water asses through the cage, coming into contact with the disinfectant cake housed therein.

Supports of this type have different use drawbacks, including: they remain in a visible position, giving the toilet bowl a negative aesthetic appearance, they are exposed to urine, rapidly becoming soiled, they make it difficult to clean the upper part of the toilet bowl and must be momentarily removed in order to leave the complete surface of the toilet bowl free to clean it; and their arrangement at a specific point on the periphery of the toilet bowl causes the disinfectant entrained by the water flushed from the tank to act only on a limited portion of the inner surface of the toilet bowl.

### Description of the Invention

The disinfectant product dispenser applicable for toilet bowls, object of the invention, is of the type comprising a container for housing a disinfectant product and, being very simply constructed, having features aimed at resolving the drawbacks of the aforementioned cage-like supports, and especially at: allowing its concealed arrangement inside the toilet bowl, preventing the direct action of urine thereon, and performing a distribution of the disinfectant product over the entire inner surface of the toilet bowl every time water is flushed from the tank. It should be mentioned that the so-called disinfectant product, like other known products, can provide other deodorizing and color properties.

According to the invention, the container of the dispenser is formed by a flexible tube, preferably made of plastic material or other materials, containing the disinfectant product and having openings distributed along same for the inlet and outlet of the water flushed by the tank; said flexible tube having a flexibility suitable for being adapted to the inner contour of the toilet bowl, for being maintained in a stable use position under the thickened portion of the toilet bowl in which the water outlets are defined.

In an embodiment of the invention, the mentioned flexible tube is closed at its opposite ends by heat, welding, melting, caps or other means preventing the outlet of the product contained therein; said tube having a length that is smaller than the inner contour of standard toilet bowls existing on the market, such that once bent and positioned in the indicated area of application, upon releasing the tube containing the disinfectant product, said tube tends to recover its extended position, adjusting itself to the inner contour of the toilet bowl and being maintained stably in said use position.

In an embodiment variant, the plastic tube has a tubular configuration with a length in accordance with the inner contour of the area of application in the toilet bowl, specifically of the area immediately under the inner thickened portion of the toilet bowl.

In this second embodiment variant, it has been provided that the ends of the tube are fixed to one another either permanently or by means of a connecting sleeve.

It must finally be mentioned that the openings defined in the tube for the passage of the flushing water of the tank and its impregnation with the disinfectant product can have any distribution which allows the inlet and outlet of the water. By way of example, the openings can define a single alignment oriented towards the upper area, define two or more longitudinal alignments, diametrically opposed or forming different angles with one another, be arranged in a staggered manner on the entire surface of the tube, or be arranged in any other manner which allows the inlet and outlet of the water flushed by the tank and allows its coming into contact with the disinfectant product housed therein.

### Description of the Drawings

To complement the description being made and for the purpose of aiding to understand the features of the invention, a set of drawings is attached to this specification in which the following has been depicted with an illustrative and nonlimiting character:
- Figure 1 shows a perspective view of an embodiment of the disinfectant product dispenser, in which the flexible tube has an open configuration and it has been partially sectioned in order to allow observing the disinfectant product contained therein.
- Figure 2 shows a schematic top plan view of the dispenser of the previous figure, depicted with dotted lines, arranged in the use position inside a toilet bowl.
- Figure 3 shows a sectioned elevational view of a toilet bowl with the dispenser of the previous figures arranged in the use position.
- Figure 4 shows a perspective view of an embodiment variant of the dispenser in which the ends of the flexible tube are permanently fixed to one another, adopting a tubular configuration.
- Figure 5 shows a perspective view of an embodiment variant of the dispenser in which the ends of the flexible tube are coupled to one another by means of a connecting sleeve, the tube adopting a tubular configuration.

### Preferred Embodiment of the Invention

As can be seen in the mentioned figures, the device of the invention comprises a flexible tube (1) made of plastic material containing a disinfectant product (2) and having openings (11) distributed along same for the inlet and outlet of the water flushed by the tank.

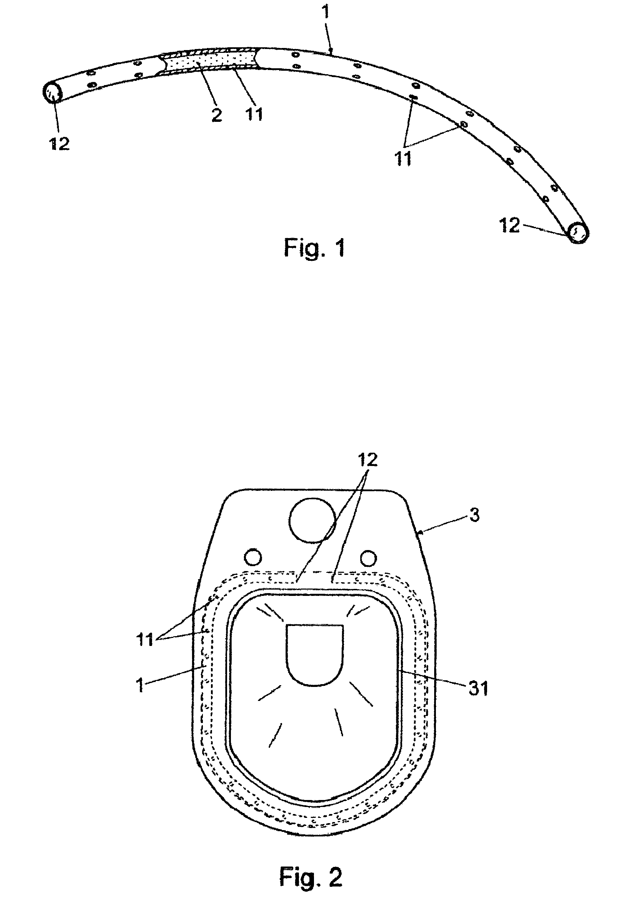

In the embodiment shown in Figures 1 to 3, the flexible tube (1) has its ends (12) closed, adopting an open longitudinal configuration.

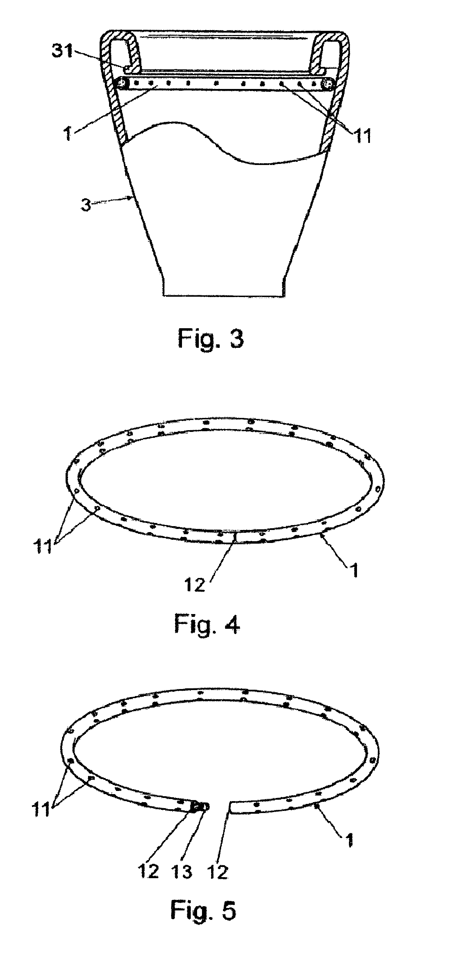

As can be seen in Figures 2 and 3, in the use position the dispenser is arranged inside the toilet bowl (3) under the inner thickened portion (31) in which the water outlets for the water coming from the tank are defined, being completely concealed from the user's view.

The placement of the dispenser in the mentioned use position can be done very easily and quickly because to do so it is sufficient to bend the flexible tube (1) and place it under the inner thickened portion (31) of the toilet bowl, then releasing it, because upon releasing it, given its flexible nature, it tends to recover the extended position, adjusting itself to the inner contour of the toilet bowl.

In the mentioned position of the dispenser, when the tank is flushed the water enters and exits the flexible tube (1) through the openings (11), coming into contact with the disinfectant product contained therein.

In this embodiment, the flexible tube (1) has a length that is suitable for covering virtually the entire inner contour of the toilet bowl (3), whereby assuring a distribution of the disinfectant product over the entire inner surface of the toilet bowl (3).

As has already been mentioned, the openings (11) defined along the flexible tube (1) can have any arrangement.

In the embodiment variant shown in Figure 4, the ends (12) of the flexible tube are permanently joined to one another, adopting a tubular configuration with a length suitable for being adapted to the inner contour of toilet bowls existing on the market.

In the embodiment variant shown in Figure 4, the flexible tube has an open longitudinal configuration and has its ends (12) coupled to one another by means of a connecting sleeve (13), adopting a tubular configuration.

Having sufficiently described the nature of the invention as well as a preferred embodiment thereof, it is hereby stated for all effects and purposes that the materials, shape, size and arrangement of the described elements can be modified provided that this does not alter the essential features of the invention that are claimed below.

## Claims

1. A disinfectant product dispenser applicable for toilet bowls, of the type comprising a container for housing a disinfectant product; **characterized in that** the mentioned container is formed by a flexible tube, preferably made of plastic material, containing the disinfectant product and having openings distributed along same for the inlet and outlet of the water flushed by the tank; said flexible tube having a flexibility suitable for being adapted to the inner contour of the toilet bowl, and for being maintained in a stable use position under the thickened portion of the toilet bowl in which the water outlets are defined.

2. The dispenser according to claim 1, **characterized in that** the flexible tube is closed at its ends and has a length that is smaller than the inner contour of toilet bowls on the market.

3. The dispenser according to claim 1, **characterized in that** the plastic tube has a tubular configuration with a length in accordance with the inner contour of the area of application in the toilet bowl.

4. The dispenser according to claim 3, **characterized in that** the ends of the tube are permanently fixed to one another.

5. The dispenser according to claim 3, **characterized in that** the ends of the tube are fixed to one another by means of a connecting sleeve.
